# EUROPÄISCHE PATENTSCHRIFT

(11) **EP 2 550 904 B1**
(45) Veröffentlichungstag und Bekanntmachung des Hinweises auf die Patenterteilung: **02.07.2014**
(21) Anmeldenummer: 12176054.0
(22) Anmeldetag: 12.07.2012
(51) Int. Cl.: A47J 31/46

(54) **Getränkeauslauf, Verfahren und Getränkespender**
Beverage spout, method and beverage dispenser
Sortie de boissons, procédé et distributeur de boissons

(30) Priorität: 29.07.2011 DE 102011080094
(43) Veröffentlichungstag der Anmeldung: 30.01.2013
(73) Patentinhaber: BSH Bosch und Siemens Hausgeräte GmbH, 81739 München (DE)
(72) Erfinder: Gruber, Michael, 83362 Surberg (DE); Heilmaier, Marion, 83317 Teisendorf (DE); Kusstatscher, Herbert, 83371 Stein a.d. Traun (DE); Thies, Manuel, 85386 Dietersheim (DE)

(56) Entgegenhaltungen:
- CN-B- 101 703 361
- DE-A1- 2 732 054
- DE-A1- 3 503 556
- DE-U- 6 913 213

## Beschreibung

Die Erfindung betrifft einen Getränkeauslauf für einen Getränkespender zum Zapfen eines Getränks, wobei dieser ein Zulaufrohr zum Anschluss an eine geräteinterne Getränkezuführung, ein abgewinkeltes Auslaufrohr zur Entnahme des Getränkes, die über einen Umlenkbereich miteinander in Fluidverbindung stehen, und ein Leitelement zum Leiten eines Getränkestroms innerhalb des Auslaufrohrs hat, sowie einen Getränkespender mit einem derartigen Getränkeauslauf.

Ein Getränkeauslauf für einen Getränkespender mit einem Zulaufrohr zum Anschluss an eine geräteinterne Getränkezuführung und mit einem abgewinkelten Auslaufrohr zur Entnahme des Getränkes, die über einen Umlenkbereich miteinander in Fluidverbindung stehen, ist beispielsweise in der DE 2 732 054 A1 gezeigt. Zur Vermeidung einer Tropfenbildung am Ende eines Zapfvorganges ist mittig in dem Auslaufrohr ein Leitzapfen angeordnet, mittels dem ein Getränkestrom geleitet werden kann. Der Leitzapfen ist stromabwärts des Umlenkbereiches angeordnet und über Verbindungsstege an Innenwandungsabschnitten des Auslaufrohres angebunden ist. Zwar kann durch den Leitzapfen die Tropfenbildung beeinflusst werden, jedoch ermöglicht dieser kein ausgeglichenes Strahlbild bei unterschiedlichen Durchflussmengen.

Aus der DE 3 503 556 C2 ist ein Gerät zur Bereitstellung von Heißwasser bekannt, in dessen Auslaufrohr eine Leitplatte angeordnet ist, die einen die Leitplatte aufnehmenden Auslaufrohrabschnitt in zwei Rohrhälften unterteilt. Jedoch ist auch mit dieser Leitplatte kein ausgeglichenes Strahlbild bei unterschiedlichen Durchflussmengen zu erzielen.

Weiterer Stand der Technik ist aus der CN 101 703 361 B bekannt. Dieses Gerät hat eine Leitplatte im Auslaufrohr, der eine beulenartige Erhebung im Zulaufrohr vorgelagert ist und die im Zusammenwirken mit der Erhebung einen Flüssigkeitsstrom im Umlenkbereich in zwei Teilströme unterteilt.

Aufgabe der Erfindung ist es, einen Getränkeauslauf für einen Getränkespender zu schaffen, der die vorgenannten Nachteile beseitigt und ein ausgeglichenes Strahlbild unabhängig von einer Durchflussmenge ermöglicht. Zudem ist es Aufgabe der Erfindung einen Getränkespender zu schaffen.

Diese Aufgabe wird gelöst durch einen Getränkeauslauf mit den Merkmalen des Patentanspruchs 1 und durch einen Getränkespender mit den Merkmalen des Patentanspruchs 13. Vorteilhafte Aus- und Weiterbildungen sind Gegenstand der jeweils abhängigen Ansprüche.

Ein erfindungsgemäßer Getränkeauslauf für einen Getränkespender zum Zapfen eines Getränkes hat ein Zulaufrohr zum Anschluss an eine geräteinterne Getränkezuführung, ein abgewinkeltes Auslaufrohr zur Entnahme des Getränkes, die über einen Umlenkbereich miteinander in Fluidverbindung stehen, und ein Leitelement zum Leiten eines Getränkestroms innerhalb des Auslaufrohrs. Das Leitelement erstreckt sich wandartig von einem Innenwandungsabschnitt des Auslaufrohres und hat eine Vorderkante, die in dem Umlenkbereich angeordnet ist, sowie eine Auslaufkante, die schräg in Richtung einer Tropfnase orientiert ist. Erfindungsgemäß hat das Leitelement eine sich in Auslaufrichtung erstreckende Hinterkante bzw. eine in Zulaufrichtung betrachtet hintere Seitenkante, die im Vergleich zu einem in Zulaufrichtung betrachtet stromaufwärtigen Leitelementenabschnitt verdickt ausgebildet ist.

Durch die Anordnung der Vorderkante in dem Umlenkbereich ragt das Leitelement mit einem Körperabschnitt quasi in das Zulaufrohr hinein, wodurch bereits der das Zulaufrohr durchströmende Getränkestrom das Leitelement umströmt. Die Umströmung bewirkt, dass bei geringen Durchflussmengen wie am Ende eines Zapfvorgangs der Getränkestrom von dem Leitelement aufgenommen wird und dann von diesem an der Tropfnase abströmt. Die Tropfnase bildet den stromabwärtigsten Bereich des Leitelements und somit quasi eine Senke, zur der durch die schräg angestellte Auslaufkante der aufgenommen Getränkestrom bzw. dessen Einzelströme gezielt geführt wird bzw. werden. Aufgrund der Oberflächenspannung der die Einzelströme bildenden Flüssigkeit wird ein vorheriges Abströmen an der Auslaufkante verlässlich verhindert. Durch die Hinterkante wird verhindert, dass die Getränkeströmung an dem Leitelement in Zulaufrichtung abströmt.

Aus strömungstechnischer Sicht ist es vorteilhaft, wenn die Hinterkante in die Tropfnase übergeht. Selbstverständlich kann die Tropfnase jedoch auch quer zur Auslaufrichtung von der Hinterkante beabstandet sein und zum Beispiel in einem mittleren Abschnitt der Auslaufkante positioniert sein. Um die Einzelströme verlässlich zu einer derartig in Längsrichtung der Auslaufkante versetzten Tropfnase zu führen, kann die Auslaufkante dann zwei trichterförmig zueinander orientierte Kantenabschnitte zur Führung der Flüssigkeit zur Tropfnase aufweisen, die im stromabwärtigen Übergangsbereich der beiden Kantenabschnitte angeordnet ist.

Um zu verhindern, dass der Getränkestrom bei geringen Durchflussmengen an dem Leitelement im Umlenkbereich vorbeigeführt wird, kann das Leitelement den Umlenkbereich vollständig durchsetzen.

Vorteilhafterweise ist die Vorderkante mittig im Zulaufquerschnitt des Zulaufrohrs angeordnet. Hierdurch wird gewährleistet, dass beim Anströmen des Leitelements der Getränkestrom in zwei gleichgroße Einzelströme unterteilt wird, wodurch beim Zusammenführen der Einzelströme hinter dem Leitelement Turbulenzen vermieden werden, die ein ausgeglichenes Strahlbild negativ beeinflussen könnten.

Bei einem Ausführungsbeispiel ist das Leitelement mit seiner Querachse in Zulaufrichtung orientiert, wodurch die Bildung von zwei gleichgroßen Teilströmen unterstützt wird.

Bei einem anderen Ausführungsbeispiel ist das Leitelement um seine Längsachse verwunden. Hierdurch wird die an dem Leitelement entlang strömende Flüssigkeit mit einem Drall beaufschlagt, mittels dem bspw. ein verdrehtes Strahlbild eingestellt werden kann.

Die Aufnahme der Flüssigkeit durch das Leitelement lässt sich verbessern, wenn die Vorderkante eine konkave Anströmfläche und zwei sich in Zulaufrichtung orientierte Seitenflächen hat, die parallel zueinander angeordnet oder in Zulaufrichtung schräg auseinanderlaufend oder in Zulaufrichtung aufeinanderzulaufend orientiert sind. Durch eine Parallelausrichtung der Seitenflächen erfolgt eine minimale Beeinflussung der Einzelströme in Zulaufrichtung. Durch eine Auseinanderrichtung der Seitenflächen wird der Getränkestrom quasi fächerförmig aufgefächert und den Einzelströmen wird im Vergleich zur Parallelausrichtung in Zulaufrichtung Energie entzogen, wodurch bereits größere Durchflussmengen von dem Leitelement gezielt aufgenommen werden. Durch eine Aufeinanderrichtung der Seitenflächen in Zulaufrichtung wird die Hinterkante relativ zur Vorderkante verdickt, wodurch den Einzelströmen ebenfalls im Vergleich zur Parallelausrichtung mehr Energie entzogen wird und größere Durchflussmengen von dem Leitelement aufgenommen werden. Die Aufeinanderrichtung der Seitenflächen ermöglicht jedoch auch eine Dickenreduzierung der Hinterkante, wodurch das Leitelement kleiner ausführbar ist.

Bei einem Ausführungsbeispiel sind die Seitenflächen jeweils zumindest mit einer in Richtung der Tropfnase orientierte Leithilfe wie eine Rinne oder eine Erhebung versehen bzw. als eine solche ausgebildet. Hierdurch wird die die Seitenfläche entlanglaufende Flüssigkeit bereits stromaufwärts der Auslaufkante zu Tropfnase geführt.

Die Tropfenbildung am Austrittsrand des Auslaufrohrs wird unterdrückt, wenn sich die Auslaufkante vom Austrittsrand zur Tropfnase erstreckt. Hierdurch wird erreicht, dass an der Innenwandung des Auslaufrohrs entlang strömende Flüssigkeit am Austrittsrand in Richtung der Tropfnase geführt wird und nicht unkontrolliert über den gesamten Austrittsrand abtropfen kann.

Das Abführen der Flüssigkeit am Auslaufrand lässt sich zusätzlich verbessern, wenn der Austrittsrand schräg zur Längsachse des Auslaufrohrs angestellt ist und die Auslaufkante in einem Randabschnitt angeordnet ist, der einen stromabwärtigsten Bereich des Auslaufrandes und somit eine Senke des Auslaufrandes darstellt.

Insbesondere zur Erleichterung einer Entformbarkeit des Zulaufrohrs ist es vorteilhaft, wenn der Zulaufquerschnitt in Zulaufrichtung konisch verjüngten ist.

Zur Erleichterung einer Entformbarkeit des Auslaufrohrs kann es vorteilhaft sein, wenn das Auslaufrohr einen in Auslaufrichtung konisch erweiterten Auslaufquerschnitt hat. Durch die konische Erweiterung wird zudem verhindert, dass sich zwischen der Austrittskante und dem Austrittsrand ein Flüssigkeitsfilm bildet, der unkontrolliert reißen kann, was in Getränkespritzern resultieren könnte,

Ein erfindungsgemäßer Getränkespender ist mit einem erfindungsgemäßen Getränkeauslauf versehen und zeichnet sich hierdurch durch ein ausgeglichenes Strahlbild bei unterschiedlichen Durchflussmengen sowie durch eine einfache und schnelle Montage und Demontage aus.

Die Erfindung eignet sich insbesondere zur Bereitstellung eines Getränkeauslaufs für einen Getränkespender, der ein gleichmäßiges Strahlbild bei unterschiedlichen Durchflussmengen und ein spritzlosen Zapfen eines Getränkes ermöglicht, sowie fertigungstechnisch einfach herzustellen ist.

Bei einem Verfahren zur Herstellung eines Getränkeauslaufs mit einem Zulaufrohr und mit einem abgewinkelten Auslaufrohr, wird der Getränkeauslauf im Spritzgießen hergestellt, wobei in das Zulaufrohr und das Auslaufrohr Werkzeugkerne eingesetzt werden, die durch eine rückwärtige Bewegung aus diesen entnommen werden. Das Verfahren ermöglicht eine einfache, schnelle und kostengünstige Herstellung eines Getränkeauslaufs in gleichbleibender und wiederholbarer hoher Qualität.

Im Folgenden wird ein bevorzugtes Ausführungsbeispiel anhand schematischer Darstellungen näher erläutert. Es zeigen:
- Figur 1: eine perspektivische Darstellung eines erfindungsgemäßen Getränkeauslaufs,
- Figur 2: einen Vertikalschnitt durch den Getränkeauslauf,
- Figur 3: einen Horizontalschnitt durch den Getränkeauslauf,
- Figur 4: den Vertikalschnitt durch den Getränkeauslauf mit einer ersten Getränkestromführung,
- Figur 5: den Horizontalschnitt durch den Getränkeauslauf mit der ersten Getränkestromführung,
- Figur 6: den Vertikalschnitt durch den Getränkeauslauf mit einer zweiten Getränkestromführung,
- Figur 7: den Horizontalschnitt durch den Getränkeauslauf mit der zweiten Getränkestromführung, und
- Figur 8: einen Fertigungsschritt zur Herstellung des Getränkeauslaufs.

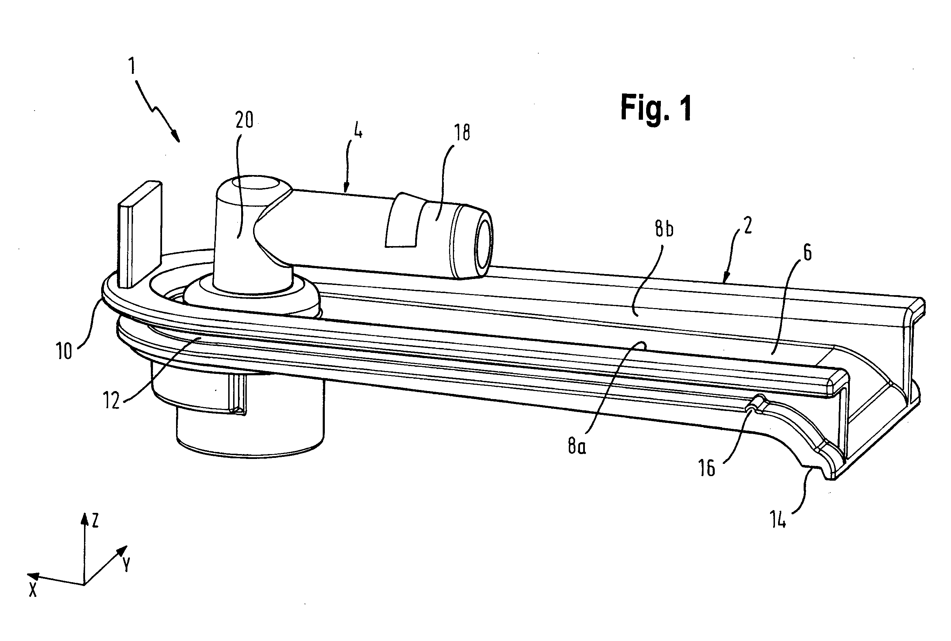

Figur 1 zeigt ein Ausführungsbeispiel eines erfindungsgemäßen Getränkeauslaufs 1 für einen Getränkespender zum Zapfen einer zu einem Getränk aufbereiteten Flüssigkeit, Der Getränkeauslauf 1 hat ein längliches Führungselement 2 zur Aufnahme in einer Schiebekulisse des Getränkespenders und ein Auslaufelement 4 zur Entnahme des Getränkes bzw. der aufbereiteten Flüssigkeit. Unter dem Begriff Getränk bzw. Flüssigkeit wird im Folgenden sowohl ein geschmackliches Heißgetränk wie Kaffee als auch ein geschmacksneutrales Heißgetränk wie Heißwasser verstanden.

Das Führungselement 2 hat eine Grundplatte 6, von der sich zwei in Längsrichtung x des Getränkeauslaufs 1 erstreckende Seitenwandungen 8a, 8b und eine bogenförmige Stirnwandung 10 erstreckt, die die Seitenwandungen 8a, 8b kopfseitig miteinander verbindet. Die Seitenwandungen 8a, 8b sind keilartig in Richtung der Stirnwandung 10 verjüngt ausgebildet. Heckseitig ist der Getränkeauslauf 1 geöffnet. Zum Zusammenwirken mit der Schiebekulisse des Getränkespenders ist in den Wandungen 8a, 8b, 10 eine außenliegende und durchgehende Führungsnut 12 ausgebildet. Diese ist derart in die Wandungen 8a, 8b, 10 integriert, dass der Getränkeauslauf 1 mit einer Außenfläche des Getränkespenders eine bündige Sichtfläche bildet. Zur Verrastung des Getränkeauslaufs 1 mit der Schiebekulisse ist heckseitig in seitlichen Nutabschnitten der Führungsnut 12 jeweils eine Rastnase 16 zur Verrastung mit jeweils einer schiebekulissenseitigen Rastvertiefung bzw. mit einem schiebekulissenseitigen Rastvorsprung angeordnet. Alternativ können die Rastnasen 16 zur Sicherung des Getränkeauslaufs 1 mittels Reibschluss an der Schiebekulisse verwenden werden. Durch die Führungsnut 12 im Zusammenwirken mit der getränkespenderseitigen Schiebekulisse und der Verrastung wird eine schnelle und einfache Montage sowie Demontage des Getränkeauslaufs 1 und somit des Getränkespenders geschaffen. Zur Bildung eines stufenlosen Überganges mit einer Seitenwand des Getränkespenders ist die Grundplatte 6 heckseitig bogenförmig abgewinkelt, wodurch die Führungsnut 12 endseitig quasi keilförmig erweitert ist. Zudem ist heckseitig eine Schulter 14 ausgebildet, mit der sich der Getränkeauslauf 1 an der Seitenwand abstützt.

Das Auslaufelement 4 ist im Stirnbereich bzw. Kopfbereich der Grundplatte 6 angeordnet. Es hat eine L-förmige Form mit einem Zulaufrohr 18 und mit einem abgewinkelten Auslaufrohr 20.

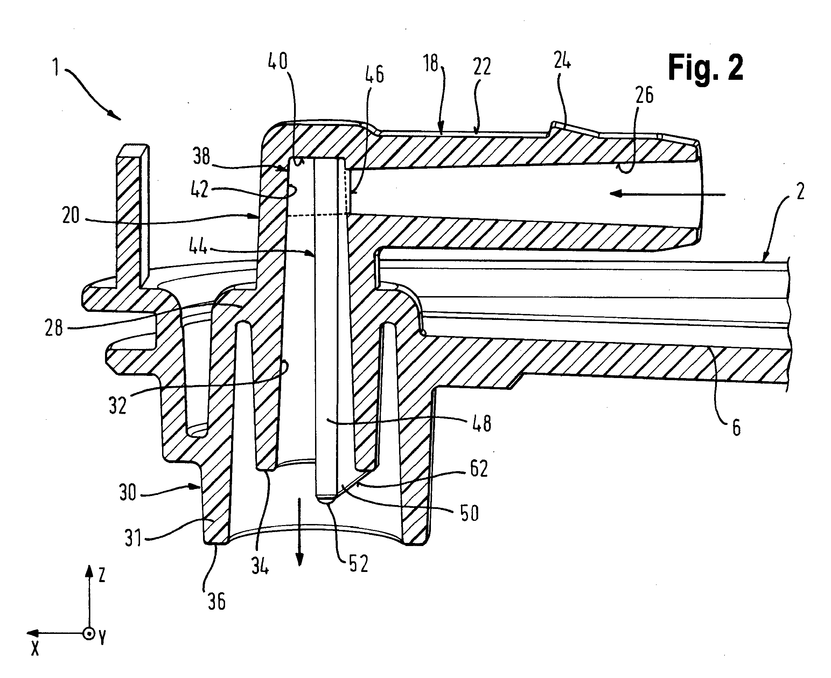

Wie in Figur 2 gezeigt, hat das Zulaufrohr 18 eine sich in Längsrichtung x des Getränkeauslaufs 1 erstreckende Längsachse xz. Es dient zur Anbindung an eine geräteinterne Getränkezuführung wie eine Verschlauchung und hat einen zylindrischen Au-ßenumfang 22, an dem zumindest ein Keilvorsprung 24 zur Sicherung der Getränkezuführung ausgebildet ist. Das Zulaufrohr 18 eine Innenwandung 26, die einen in Zulaufrichtung konisch verjüngten Zulaufquerschnitt definiert. Die Zulaufrichtung ist durch den gemäß der Darstellung in Figur 2 waagerechten Pfeil angedeutet.

Das Auslaufrohr 20 hat eine sich in Hochrichtung z des Getränkeauslaufs 1 erstreckende Längsachse xa. Es durchsetzt eine Bodenwandung 28 eines becherartigen Körpers 30, der eine in Auslaufrichtung konisch erweiterte Umfangswandung 31 hat, die sich durch die Grundplatte 6 des Führungselementes 2 erstreckt. Das Auslaufrohr 20 hat eine Innenwandung 32, die einen in Auslaufrichtung konisch erweiterten Auslaufquerschnitt definiert. Die Auslaufrichtung ist durch den gemäß der Darstellung in Figur 2 vertikalen Pfeil angedeutet. Zudem weist es einen ringförmigen Austrittsrand 34 auf, der stromaufwärts eines Mündungsrandes 36 des becherartigen Körpers 30 angeordnet ist.

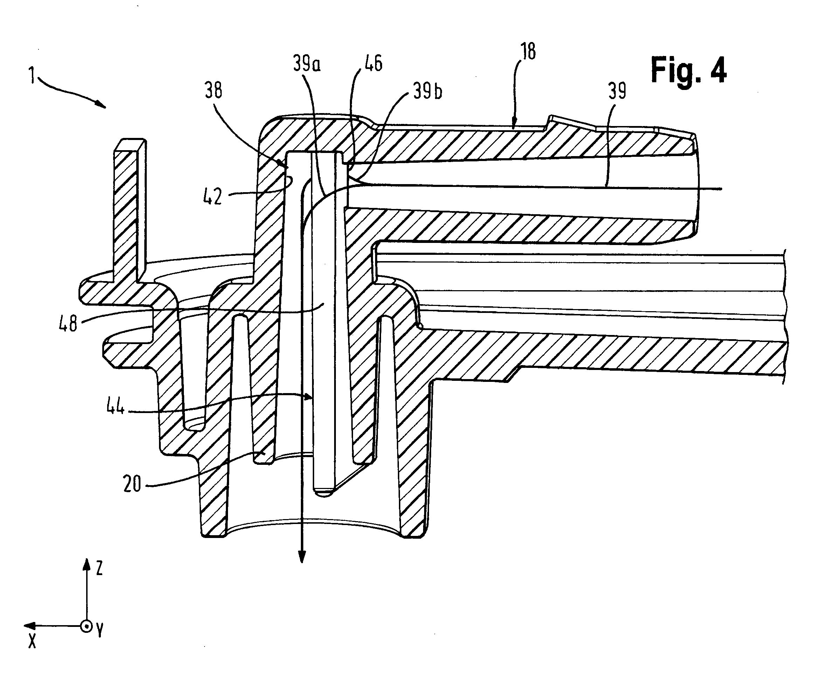

Zur Zuführung des Getränkestroms aus dem Zulaufrohr 18 in das Auslaufrohr 20 ist stromabwärts des Zulaufrohrs 18 und stromaufwärts des Auslaufrohrs 20 ein integral mit dem Zulaufrohr 18 und dem Auslaufrohr 20 ausgebildeter Umlenkbereich 38 vorgesehen. Der Umlenkbereich 38 ist in Figur 2 durch die gestrichelten Linien zeichnerisch angedeutet und stellt eine fluidtechnische Verbindung zwischen den beiden Rohren 18, 20 her. Er bewirkt eine Umlenkung des Getränkestroms 39 (Figuren 4 bis 7) aus der Zulaufrichtung in die Auslaufrichtung. Im gezeigten Ausführungsbeispiel wird der Getränkestrom 39 um 90° umgelenkt. Der Umlenkbereich 38 hat eine Begrenzungswandung 40, die sich in Zulaufrichtung erstreckt und stufenförmig zur Innenwandung 26 des Zulaufrohrs 18 zurückgesetzt ist. Zudem hat der Umlenkbereich 38 eine Umlenkwandung 42, die sich in Auslaufrichtung erstreckt und stufenlos in die Innenwandung 32 des Auslaufrohrs 18 übergeht.

Zum Leiten des Getränkestroms und somit zur Optimierung eines Strahlbildes ist ein Leitelement 44 vorgesehen. Das Leitelement 44 hat eine plattenartige Gestalt mit einer Vorderkante 46, einer Hinterkante 48, einer Auslaufkante 50 und mit einer Tropfnase 52.

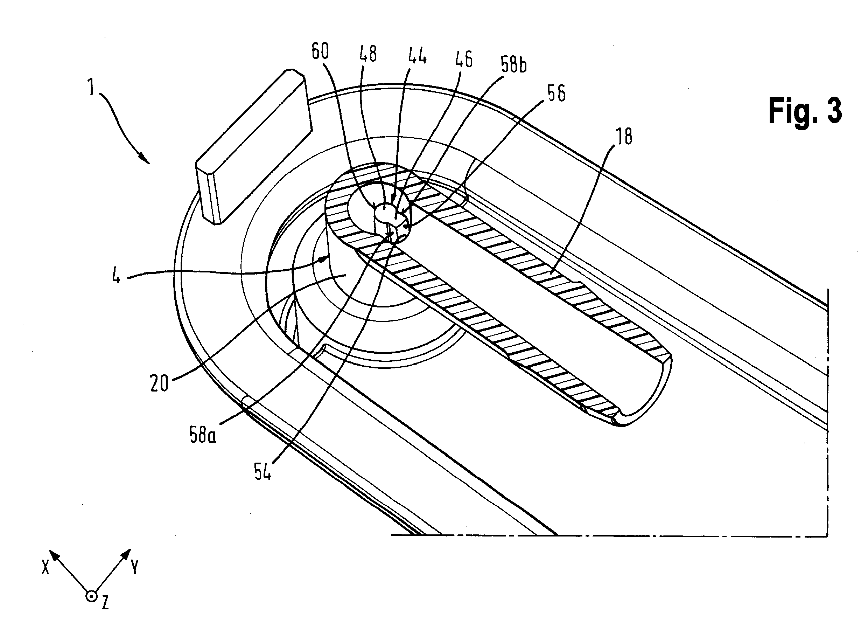

Wie in den Figuren 2 und 3 dargestellt, ist das Leitelement 44 mit seiner Längsachse xl in Auslaufrichtung und mit seiner Querachse yl in Zulaufrichtung orientiert. Es erstreckt sich wandartig von einem Innenwandungsabschnitt 54 des Auslaufrohrs 20 und ist kopfseitig an der Begrenzungswandung 40 des Umlenkbereiches 38 angebunden.

Die Vorderkante 46 (Figur 2) ist eine in Zulaufrichtung betrachtet vordere Seitenkante des Leitelementes 44. Sie durchsetzt den Umlenkbereich 38 und erstreckt sich somit in Hochrichtung z des Getränkeauslaufs 1 über den gesamten Zulaufquerschnitt. Sie kreuzt die Längsachse xz des Zulaufrohrs 18 und ist somit mittig des das Zulaufrohr 18 durchströmenden Getränkestroms 39 (Figuren 4 bis 7) angeordnet. Sie hat eine konkave Anströmfläche 56 und zwei voneinander abgewandte Seitenflächen 58a, 58b, die parallel zueinander orientiert sind.

Die Hinterkante 48 (Figuren 2 und 3) ist eine in Zulaufrichtung betrachtet hintere Seitenkante des Leitelementes 44. Sie verläuft in Längsrichtung xl des Leitelements 44 und somit in Auslaufrichtung. Sie ist gegenüber einem in Zulaufrichtung betrachtet stromaufwärtigen Leitelementenabschnitt kugelartig erweitert. In dem gezeigten Ausführungsbeispiel ist der Leitelementenabschnitt von den voneinander abgewandten Seitenflächen 58a, 58b und somit von der Vorderkante 46 gebildet. Sie hat eine die Seitenflächen 58a, 58b miteinander verbindende konkave Kantenfläche 60, die stromabwärts in die Tropfnase 52 übergeht.

Die Auslaufkante 50 (Figur 2) ist in etwa quer zur Vorderkante 46 und zur Hinterkante 48 orientiert. Sie erstreckt sich vom Austrittsrand 34 und geht schräg zur Auslaufrichtung in die Tropfnase 52 über. Zur verbesserten Führung der das Leitelement 44 benetzenden Flüssigkeit hat sie eine konkave Führungsfläche 62. Zur verbesserten Führung der Flüssigkeit von der Innenwandung 32 des Auslaufrohrs 20 zur Auslaufkante 50 kann der Auslaufrand 34 schräg in Auslaufrichtung angestellt sein und mit einem stromabwärtigsten Bereich versehen sein der quasi als eine Senke wirkt und an dem die Austrittskante 50 angebunden ist bzw. von der sich die Auslaufkante 50 in Richtung der Tropfnase 52 erstreckt.

Die Tropfnase 52 (Figur 2) ist stromabwärts des Austrittsrands 34 angeordnet. Sie ist als eine radial innere beulenartige Erhebung der Auslaufkante 50 ausgebildet. Sie bildet einen stromabwärtigsten Bereich des Leitelements 44 und somit quasi eine Senke, zu der jegliche das Leitelement 44 benetzende Flüssigkeit geführt wird und von der diese dann kontrolliert von dem Leitelement 44 abströmt.

Im Folgenden werden anhand der Figuren 4, 5, 6 und 7 Funktionsweisen des Leitelements 44 beispielhaft erläutert.

Die Flüssigkeit bzw. das Getränk wird über die Getränkezuführung dem Auslaufelement 4 zugeführt. In dem Zulaufrohr 18 bildet sich der Getränkestrom 39 aus, der das Zulaufrohr 18 in Zulaufrichtung und somit in Längsrichtung x des Getränkeauslaufs 1 durchströmt. Im Mündungsbereich zum Umlenkbereich 38 trifft der Getränkestrom 39 auf die Vorderkante 46 des Leitelements 44 auf und wird als zwei Einzelströme 39a, 39b um das Leitelement 44 geführt.

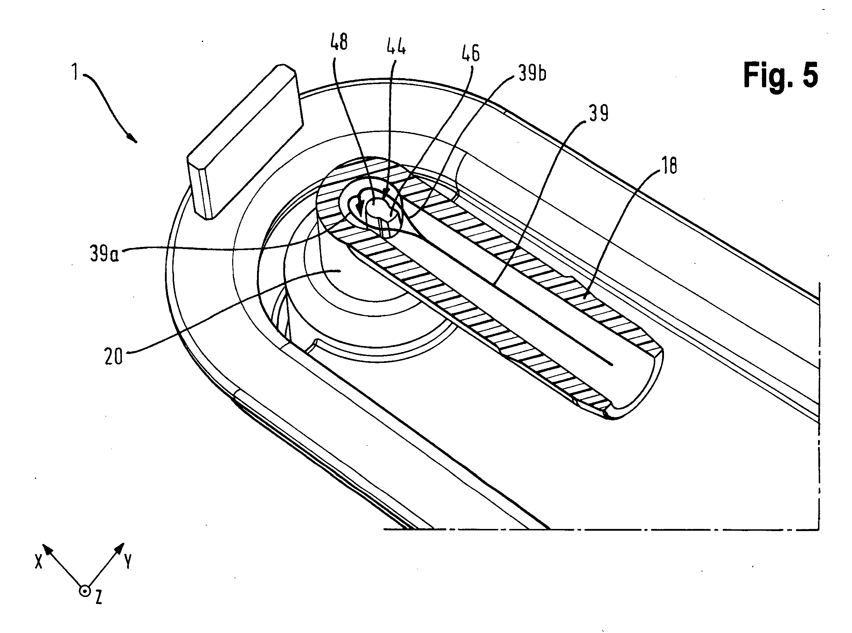

Bei großen Durchflussmengen werden, wie in den Figuren 4 und 5 gezeigt, die Einzelströme 39a, 39b in Zulaufrichtung betrachtet im Wesentlichen hinter der Hinterkante 48 wieder zum Getränkestrom 39 zusammengeführt und im Umlenkbereich 38 beim Auftreffen auf den Wandungsabschnitt 42 in Auslaufrichtung und somit in Hochrichtung z des Getränkeauslaufs 1 um 90° umgelenkt. Der Getränkestrom 39 strömt das Auslaufrohr 20 hinab und tritt stromabwärts aus diesem aus. Selbstverständlich werden beim Auftreffen der Einzelströme 39a, 39b auf die Hinterkante 48 nicht skizzierte Teilströme gebildet. Die Teilströme werden durch die Hinterkante 48 in Auslaufrichtung umgelenkt, dann entlang der Auslaufkante 50 zur Tropfnase 52 geführt, von dieser von dem Leitelement 44 abströmen und dann in den wieder zusammengeführten Getränkestrom 39 übergehen.

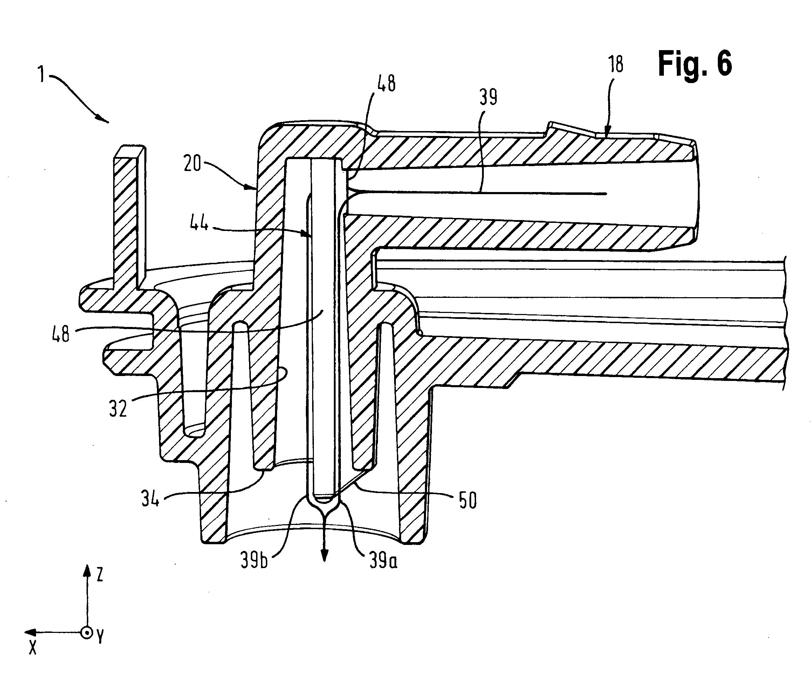

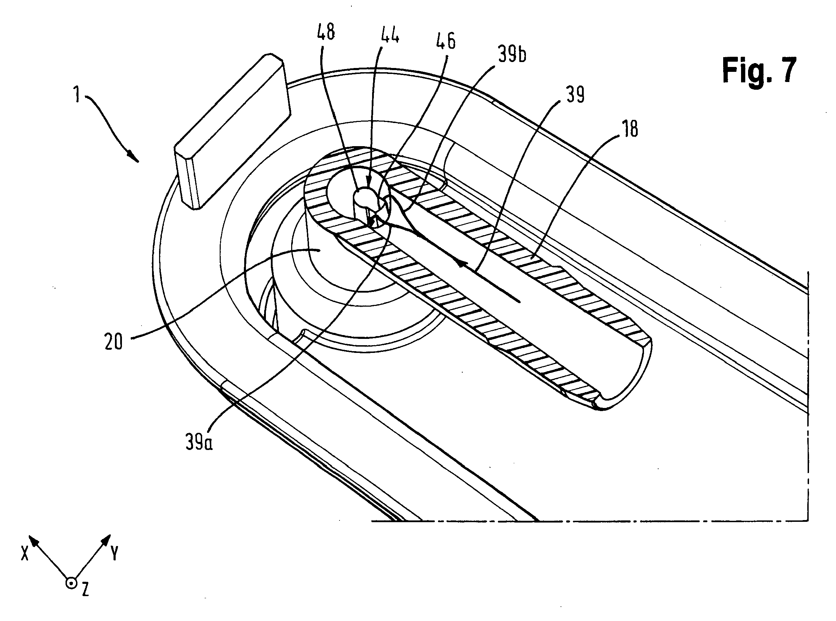

Bei geringen Durchflussmengen wie am Ende eines Zapfvorgangs verhindert die verdickte Hinterkante 48 eine Zusammenführung der Einzelströme 39, 39b in Zulaufrichtung hinter der Hinterkante 48. Die Hinterkante 48 stellt quasi eine Barriere dar, die von den Einzelströmen 39a, 39b nicht überwunden werden kann. Die Einzelströme 39a, 39b werden, wie in den Figur 6 und 7 gezeigt, an der Hinterkante 48 im Bereich des Umlenkbereichs 38 in Auslaufrichtung um 90° umgelenkt und strömen als Einzelströme 39a, 39b entlang der Seitenflächen 58a, 58b in Richtung der Auslaufkante 50. Die Einzelströme 39a, 39b umströmen die Auslaufkante 50 und werden wieder zum Getränkestrom 39 zusammengeführt. Dieser fließt aufgrund der Schrägstellung der Auslaufkante 50 in Richtung der Tropfnase 52 und strömt von dieser kontrolliert ohne Tropfenbildung ab.

Die Flüssigkeit, die die Innenwandung 32 des Auslaufrohrs 20 benetzt, fließt in Richtung des Austrittsrandes 34 und wird von diesem zur Auslaufkante 50 geführt, wo sie mit dem zur Tropfnase 52 orientierten Getränkestrom 39 zusammengeführt wird.

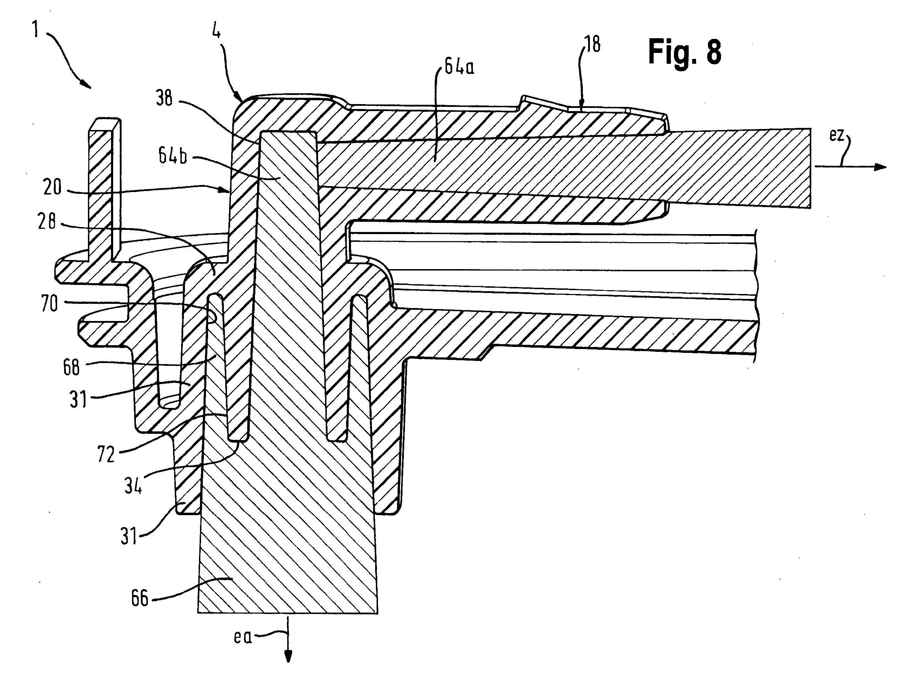

Wie in Figur 8 gezeigt, ist der Getränkeauslauf 1 als ein fertigungstechnisch einfach herzustellendes kunststoffbasiertes Spritzgussteil ausgeführt. Da das Zulaufrohr 18 und das Auslaufrohr 20 durch die konische Verjüngung in Zulaufrichtung bzw. die konische Erweiterung in Auslaufrichtung jeweils in Entformungsrichtung ez, ea konisch erweitert sind, können diese bequem durch eine rückwärtige Bewegung der in ihrem Inneren angeordneten Werkzeugkernen 64a, 64b entformt werden. Aufgrund der gegenüber der Innenwandung 26 des Zulaufrohrs 18 zurückgesetzten Begrenzungswand 40 weist der Werkzeugkern 64b zur Ausbildung des Umlenkbereichs 38 einen nicht bezifferten ersten integralen Endabschnitt auf.

Zudem erlaubt das Auslaufelement 4 eine gleichzeitige Ausbildung des becherartigen Körpers 30. Hierzu weist der Werkzeugkern 64b des Auslaufrohrs 20 einen zweiten integralen Endabschnitt 66 auf, der mit einem entsprechenden rückwärtigen Axialkragen 68 zur Ausbildung eines Ringraums 70 zwischen dem Auslaufrohr 20 und der Umfangswandung 31 des Körpers 30 versehen ist. Zusätzlich zur Verjüngung der Umfangswandung 31 in Richtung der Bodenwandung 28 ist zur radialen Erweiterung des Ringraums 70 in Entformungsrichtung ea das Auslaufrohr 20 außenumfangsseitig im Bereich seines Austrittsrandes 34 mit einer Anfasung 72 versehen, wodurch sich die Entformung des Auslaufrohrs 20 weiter vereinfachen lässt.

### Bezugszeichenliste

- 1: Getränkeauslauf
- 2: Führungselement
- 4: Auslaufelement
- 6: Grundplatte
- 8a, b: Seitenwandung
- 10: Stirnwandung
- 12: Führungsnut
- 14: Schulter
- 16: Rastnase
- 18: Zulaufrohr
- 20: Auslaufrohr
- 22: Außenumfang
- 24: Keilvorsprung
- 26: Innenwandung
- 28: Bodenwandung
- 30: Körper
- 31: Umfangswandung
- 32: Innenwandung
- 34: Austrittsrand
- 36: Mündungsrand
- 38: Umlenkbereich
- 39: Getränkestrom
- 39a,b: Einzelstrom
- 40: Begrenzungswandung
- 42: Umlenkwandung
- 44: Leitelement
- 46: Vorderkante
- 48: Hinterkante
- 50: Auslaufkante
- 52: Tropfnase
- 54: Innenwandungsabschnitt
- 56: Anströmfläche
- 58a, b: Seitenfläche
- 60: Kantenfläche
- 62: Führungsfläche
- 64a, b: Werkzeugkern
- 66: Endabschnitt
- 68: Axialkragen
- 70: Ringraum
- 72: Anfasung

- x: Längsrichtung Getränkeauslauf
- xz: Längsachse Zulaufrohr
- xa: Längsachse Auslaufrohr
- xl: Längsachse Leitelement
- yl: Querachse Leitelement
- z: Hochrichtung Getränkeauslauf
- ez: Entformungsrichtung Zulaufrohr
- ea: Entformungsrichtung Auslaufrohr

## Patentansprüche

1. Getränkeauslauf (1) für einen Getränkespender zum Zapfen eines Getränkes, mit einem Zulaufrohr (18) zum Anschluss an eine geräteinterne Getränkezuführung, mit einem abgewinkelten Auslaufrohr (20) zur Entnahme des Getränkes, die über einen Umlenkbereich (38) miteinander in Fluidverbindung stehen, und mit einem Leitelement (44) zum Leiten eines Getränkestroms innerhalb des Auslaufrohrs, wobei sich das Leitelement (44) wandartig von einem Innenwandungsabschnitt (54) des Auslaufrohrs (20) erstreckt, und eine Vorderkante (46) hat, die in dem Umlenkbereich (38) angeordnet ist, sowie eine Auslaufkante (50) aufweist, die schräg in Richtung einer Tropfnase (52) orientiert ist, **dadurch gekennzeichnet, dass** das Leitelement (44) eine im Vergleich zu einem in Zulaufrichtung betrachtet stromaufwärtigen Leitelementenabschnitt eine verdickte Hinterkante (48) hat, die sich in Auslaufrichtung erstreckt.

2. Getränkeauslauf nach Anspruch 1, wobei die Hinterkante (48) in die Tropfnase (52) übergeht.

3. Getränkeauslauf nach Anspruch 1 oder 2, wobei das Leitelement (44) den Umlenkbereich (38) vollständig durchsetzt.

4. Getränkeauslauf nach einem der vorhergehenden Ansprüche, wobei die Vorderkante (44) mittig im Zulaufquerschnitt des Zulaufrohrs (18) angeordnet ist.

5. Getränkeauslauf nach Anspruch 4, wobei das Leitelement (44) mit seiner Querachse (yl) in Zulaufrichtung orientiert ist.

6. Getränkeauslauf nach einem der vorhergehenden Ansprüche, wobei das Leitelement (44) um seine Längsachse (xl) verwunden ist.

7. Getränkeauslauf nach einem der vorhergehenden Ansprüche, wobei die Vorderkante (46) eine konkave Anströmfläche (56) und zwei sich in Zulaufrichtung orientierte Seitenflächen (58a, 58b) hat, die parallel oder in Zulaufrichtung schräg auseinanderlaufend oder in Zulaufrichtung aufeinander zulaufend orientiert sind.

8. Getränkeauslauf nach einem der vorhergehenden Ansprüche, wobei die Seitenflächen (58a, 58b) jeweils zumindest eine in Richtung der Tropfnase (52) orientierte Leithilfe aufweisen.

9. Getränkeauslauf nach einem der vorhergehenden Ansprüche, wobei sich die Auslaufkante (50) von einem Austrittsrand (34) des Auslaufrohrs (20) erstreckt und die Tropfnase (52) stromabwärts des Austrittsrands (34) angeordnet ist.

10. Getränkeauslauf nach Anspruch 9, wobei der Austrittsrand (34) schräg zur Längsachse (xl) des Auslaufrohrs (20) angestellt ist und die Auslaufkante (50) in einem Randabschnitt angeordnet ist, der eine Senke des Auslaufrandes (34) darstellt.

11. Getränkeauslauf nach einem der vorhergehenden Ansprüche, wobei der Zulaufquerschnitt des Zulaufrohrs (18) in Zulaufrichtung konisch verjüngt ist.

12. Getränkeauslauf nach einem der vorhergehenden Ansprüche, wobei das Auslaufrohr (20) einen in Auslaufrichtung konisch erweiterten Auslaufquerschnitt hat.

13. Getränkespender mit einem Getränkeauslauf (1) nach einem der Ansprüche 1 bis 12.

## Claims

1. Beverage spout (1) for a beverage dispenser for dispensing a beverage, having an inflow pipe (18) for connection to a device-internal beverage supply and a bent discharge pipe (20) for removal of beverage, which are fluidically connected with each other by a deflecting region (38), and having a conducting element (44) for conducting a beverage flow within the discharge pipe, wherein the conducting element (44) extends in a wall shape from an inner wall section (54) of the discharge pipe (20) and has a front rim (46) arranged in the deflecting region (38), and also has a discharge rim (50) that is diagonally oriented in the direction of a drip projection (52), **characterised in that** the conducting element (44) has a thickened rear rim (48), compared with an upstream section of conducting element as viewed in the direction of inflow, that extends in the direction of outflow.

2. Beverage spout according to claim 1, wherein the rear rim (48) extends into the drip projection (52).

3. Beverage spout according to claim 1 or 2, wherein the conducting element (44) extends fully through the deflecting region (3 8).

4. Beverage spout according to one of the preceding claims, wherein the front rim (44) is arranged centrally in the inflow cross-section of the inflow pipe (18).

5. Beverage spout according to claim 4, wherein the conducting element (44) in its transverse axis (yl) is oriented in the direction of inflow.

6. Beverage spout according to one of the preceding claims, wherein the conducting element (44) is twisted about its longitudinal axis (xl).

7. Beverage spout according to one of the preceding claims, wherein the front rim (46) has a concave inflow surface (56) and two side surfaces (58a, 58b) oriented in the direction of inflow that are oriented in parallel or diagonally divergent from one another in the direction of inflow or convergently toward one another in the direction of inflow.

8. Beverage spout according to one of the preceding claims, wherein each of the side surfaces (58a, 58b) has at least one conducting aid that is oriented in the direction of the drip projection (52).

9. Beverage spout according to one of the preceding claims, wherein the discharge rim (50) extends from an exit edge (34) of the discharge pipe (20) and the drip projection (52) is arranged downstream of the exit edge (34).

10. Beverage spout according to claim 9, wherein the exit edge (34) is positioned diagonally to the longitudinal axis (xl) of the discharge pipe (20) and the discharge rim (50) is arranged in an edge section that forms a depression of the discharge edge (34).

11. Beverage spout according to one of the preceding claims, wherein the inflow cross-section of the inflow pipe (18) is conically narrowed in the direction of inflow.

12. Beverage spout according to one of the preceding claims, wherein the discharge pipe (20) has a conically widened outflow cross-section in the direction of outflow.

13. Beverage dispenser having a beverage spout (1) according to one of claims 1 to 12.

## Revendications

1. Sortie de boisson (1) pour un distributeur de boisson permettant de prélever une boisson, comprenant un conduit d'arrivée (16) pour le raccordement à un dispositif d'alimentation en boisson interne à l'appareil, comprenant un,conduit de sortie coudé (20) pour le prélèvement de la boisson, lesquels sont en communication fluide mutuelle par l'intermédiaire d'une zone de renvoi (38), et comprenant un élément de guidage (44) destiné à guider un flux de boisson à l'intérieur du conduit de sortie, l'élément de guidage (44) s'étendant en forme de paroi à partir d'une section de paroi intérieure (54) du conduit de sortie (20), et ayant un bord avant (46) qui est disposé dans la zone de renvoi (38), et présentant un bord terminal (50) qui est orienté de manière oblique en direction d'un rejetteau (52), **caractérisée en ce que** l'élément de guidage (44) a un bord arrière épaissi (48) en comparaison avec une section d'élément de guidage en amont en vue dans le sens d'arrivée, le bord arrière épaissi s'étendant dans le sens de sortie.

2. Sortie de boisson selon la revendication 1, le bord arrière (48) se transformant en rejetteau (52).

3. Sortie de boisson selon la revendication 1 ou 2, l'élément de guidage (44) traversant la zone de renvoi (38) entièrement.

4. Sortie de boisson selon l'une quelconque des revendications précédentes, le bord avant (44) étant disposé centralement dans la section transversale d'arrivée du conduit d'arrivée (18).

5. Sortie de boisson selon la revendication 4, l'élément de guidage (44) étant orienté dans le sens d'arrivée avec son axe transversal (yl).

6. Sortie de boisson selon l'une quelconque des revendications précédentes, l'élément de guidage (44) étant en torsion autour de son axe longitudinal (xl).

7. Sortie de boisson selon l'une quelconque des revendications précédentes, le bord avant (46) ayant une surface d'écoulement concave (56) et deux surfaces latérales (58a, 58b) orientées dans le sens d'arrivée, lesquelles sont orientées parallèlement ou en divergeant obliquement dans le sens d'arrivée ou en convergeant les unes vers les autres dans le sens d'arrivée.

8. Sortie de boisson selon l'une quelconque des revendications précédentes, les surfaces latérales (58a, 58b) présentant respectivement au moins une aide de guidage orientée dans le sens du rejetteau (52).

9. Sortie de boisson selon l'une quelconque des revendications précédentes, le bord terminal (50) s'étendant à partir d'un bord de sortie (34) du conduit de sortie (20) et le rejetteau (52) étant disposé en aval du bord de sortie (34).

10. Sortie de boisson selon la revendication 9, le bord de sortie (34) étant situé de manière oblique par rapport à l'axe longitudinal (xl) du conduit de sortie (20) et le bord terminal (50) étant disposé dans une section de bord qui représente une dépression du bord de sortie (34).

11. Sortie de boisson selon l'une quelconque des revendications précédentes, la section transversale d'arrivée du conduit d'arrivée (18) se rétrécissant de manière conique dans le sens d'arrivée.

12. Sortie de boisson selon l'une quelconque des revendications précédentes, le conduit de sortie (20) ayant une section de sortie élargie de manière conique dans le sens de sortie.

13. Distributeur de boisson muni d'une sortie de boisson (1) selon l'une quelconque des revendications 1 à 12.
